Europäisches Patentamt

European Patent Office

Office européen des brevets

(11) Publication number: **0 207 998**

**A1**

# EUROPEAN PATENT APPLICATION

published in accordance with Art. 158(3) EPC

(21) Application number: 86900283.2

(22) Date of filing: 27.12.85

Data of the international application taken as a basis:

(86) International application number:
PCT/JP85/00726

(87) International publication number:
WO86/04160 (17.07.86 86/17)

(51) Int. Cl.⁴: **G 05 B 19/403**

(30) Priority: 28.12.84 JP 279720/84

(43) Date of publication of application:
14.01.87 Bulletin 87/3

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KISHI, Hajimu
Hino Hirayamadai Jutaku 1104 7-8, Asahigaoka
6-chome Hino-shi Tokyo 191(JP)

(72) Inventor: TANAKA, Kunio
8-13, Tamakawa-cho 5-chome
Akishima-shi Tokyo 196(JP)

(72) Inventor: TAKEGAHARA, Takashi
Janbohru Hachioji 604 1-9, Myoujin-cho 4-chome
Hachioji-shi Tokyo 192(JP)

(72) Inventor: ONISHI, Yasushi
3-27, Tamadaira
Hino-shi Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) **METHOD OF PREPARING NC DATA.**

(57) A method of preparing NC data, and particularly a method of preparing NC data by preparing macros (macros A, B, C, . . .) that determine auxiliary data for machining (such as tools, the number of revolutions of main spingle, cutting speed, cutting conditions, or the like) in addition to the processing program (MNDP) for preparing NC data. The method of preparing NC data comprises: a step for interactively inputting at least data related to the shapes among the data required for preparing the NC data; a step for storing in advance in the memory (13) the processing program (MNDP) for automatically preparing the NC data using said data related to the shapes, and the macros (macros A, B, C, . . .) that determine auxiliary data for machining required for preparing the NC data; a step for calling a macro that corresponds to said auxiliary data for machining in determining the auxiliary data for a predetermined machining; a step for determining the auxiliary data for the machining using said macro; and a step for preparing the NC data that perform the machining in accordance with a shape that is input by using said data related to the shapes and the auxiliary data for machining under the contorl of the processing program.

./...

# FIG. 5

0207998

## DESCRIPTION

### NC DATA CREATION METHOD

Technical Field

This invention relates to a method of creating NC data. More particularly, the invention relates to a method of creating NC data in which macros for deciding auxiliary machining data (such as a tool, spindle rotational speed, cutting velocity and cutting conditions) are prepared separately of a processing program for NC data creation.

Background Art

Automatic programming systems have come into practical use and are utilized to create an NC tape (NC program data) from a design drawing through a simple operation by entering data in a conversational mode using a graphic display screen. If final part dimensions written on the design drawing, workpiece material, auxiliary machining data and the like are specified, the automatic programming system will automatically create an NC tape for performing machining in accordance with the final part profile. Further, with such an automatic programming system, referential information is graphically displayed on the screen from time to time and prompts are made in ordinary language, so that dimensions and various data can be entered in simple fashion in response to the prompts.

Conventionally, the auxiliary machining data such as the tool number of the tool used, the rotational speed of the spindle, cutting velocity and cutting conditions, which are necessary for creating the NC data, are entered by an operator using a keyboard or decided automatically under the control of a processing program. In the case where the operator determines the data, however, considerable skill is required and programming is troublesome. Accordingly, systems having a function for deciding the auxiliary machining data automatically are increasing in number.

There are occasions when there is a need for NC program data created by a method suited to the machine tool of a particular user's company, or for NC data program that reflects the know-how possessed by a user with regard to use of a machine tool. For this reason, there are cases where the maker of the system is requested to alter the method of deciding the auxiliary machining data, such as the tool number of the tool used, the rotational speed of the spindle, cutting velocity and cutting conditions necessary for creating the NC program data, so that method will conform to a particular machine tool or to the needs of the user.

In an automatic programming system that creates NC data by automatically deciding the auxiliary machining data, such a request is dealt with by remaking the entirety of the processing program for NC data creation in such a manner that the auxiliary machining data will be decided in accordance with the method requested.

However, creating the entirety of a processing program anew is a complicated operation and results in higher costs. In addition, a considerable period of time is needed to create the program, thus making it difficult to comply with the user's request promptly.

Accordingly, an object of the present invention is to provide an NC data creation method which does not require that a processing program be revised in its entirety when there is a change in the method of deciding auxiliary machining data.

Disclosure of the Invention

Among data necessary for creating NC data, at least shape date are entered in a conversational mode. A processing program for creating NC data automatically using the shape data and the like, and macros for deciding auxiliary machining data necessary for NC data creation are stored in advance in an internal memory of an automatic programming apparatus. The auxiliary machining data are, by way of example, the tool used, spindle rotational speed, cutting velocity and cutting conditions. The macros stored in the memory for each item of auxiliary machining data include a macro for deciding the tool used, a macro for deciding the rotational speed of the spindle, a macro for deciding the cutting velocity, and a macro for deciding the cutting conditions (amount of clearance, depth of cut, finishing margin, amount of relief, etc.).

At a step of deciding prescribed auxiliary data following entry of the shape data and other necessary data, a macro corresponding to the auxiliary data is read out of the memory under the control of the processing program. Thereafter, the macro decides the auxiliary data by using data entered previously or data previously decided. When the shape data and all the necessary auxiliary machining data have been decided through the foregoing processing, the processing program uses these shape data and auxiliary data to create NC data for performing machining in accordance with the inputted shape.

Brief Description of the Drawings

Fig. 1 is a block diagram of an automatic programming apparatus for practicing the NC data creation method according to the present invention;

Fig. 2 is an external view of the automatic programming apparatus;

Fig. 3 is a view for describing the shape of a hole;

Fig. 4 is a flowchart of processing;

Fig. 5 is a view for describing what is stored in a RAM within the automatic programming apparatus;

Fig. 6 is a view for describing a tooling file;

Fig. 7 is a view showing the shapes of drilling and center drilling tools registered in the tooling file;

Fig. 8 is a flowchart of a tool determining macro;

Fig. 9 is a view for describing a spindle rotational speed file; and

Fig. 10 is a flowchart of a spindle determining macro.

## Best Mode for Carrying Out the Invention

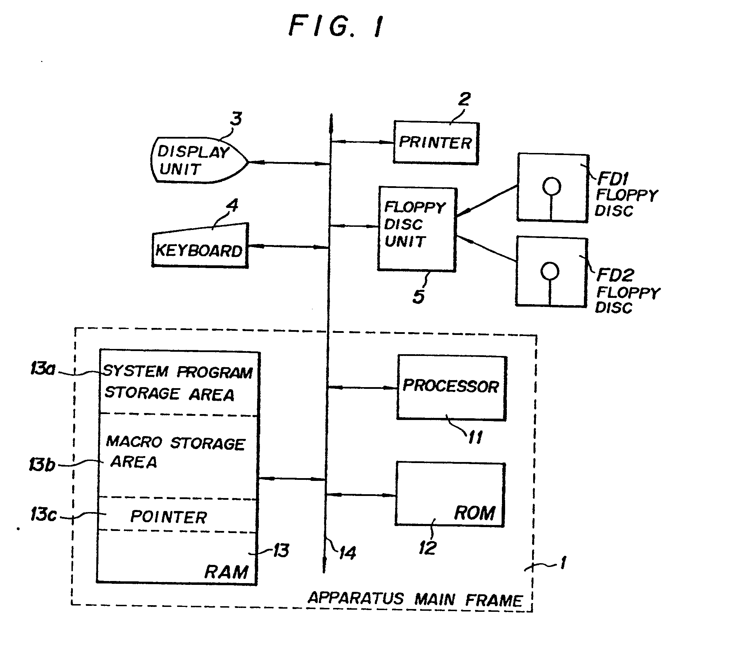

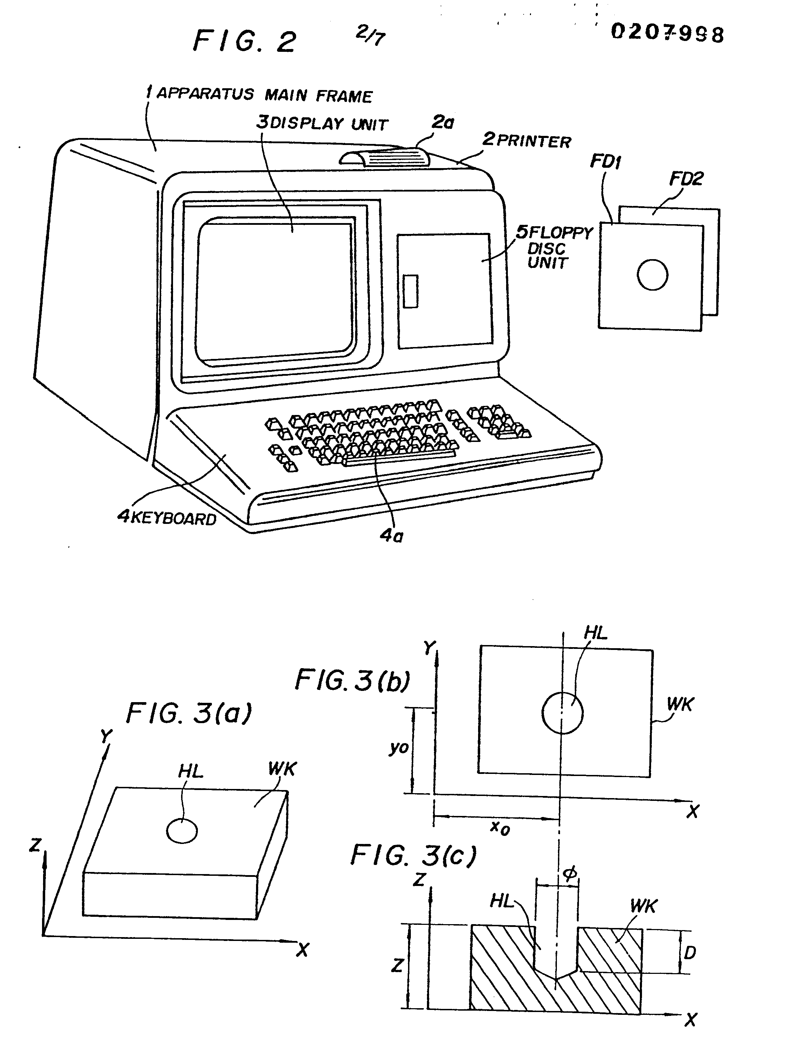

Fig. 1 is a block diagram of an automatic programming apparatus for practicing the NC data creation method according to the present invention, and Fig. 2 is an external view of the automatic programming apparatus.

A main frame 1 (Fig. 2) has a top side provided with a printer 2 and a front side provided with a CRT display unit 3. Disposed in front of the CRT display unit 3 is a keyboard 4 on which there are provided an array of keys 4a such as character keys, numeric keys and function keys. Disposed at the side of the CRT display unit 3 is a floppy disc unit 5. Numeral 2a denotes a recording paper on which printing is performed by the printer 2. FD1, FD2 represent floppy discs.

The main frame 1 is provided with a processor 11 (Fig. 1), a ROM 12 and a RAM 13, which are interconnected by a bus line 14.

The floppy disc FD1 stores a processing program for NC data creation, and a macro processing program. The floppy disc FD2 stores various macros and various files. It should be noted that a macro is a program having the nature of a subroutine or subprogram for deciding auxiliary machining data such as the tool used, spindle rotational speed, cutting velocity and cutting conditions. There are macros for deciding the tool used, the rotational speed of the spindle, the cutting velocity and the cutting conditions.

Files include a tooling file, materials file, spindle rotational speed file and the like. A materials file is composed of a plurality of records. Each record is prepared for a particular material (aluminum, stainless steel, etc.) and contains several items of cutting condition data (amount of clearance, finishing margin, depth of cut, etc.). A tooling file (e.g. a tooling file for drilling a hole) is composed of a plurality of records, each of which is prepared for a tool. Each record contains data specifying (1) tool type (center boring tool, drilling tool, countersinking tool, tapping tool), (2) data specifying tool diameter, (3) data specifying tool length, (4) data particular to each type of tool, and data specifying tool number (T code) and the like.

Let us now describe a method of creating NC data for a case where a hole HL is cut at a predetermined point on a workpiece WK in Fig. 3 by means of a drilling tool. Fig. 3(a) is a perspective view, (b) a plan view and (c) a sectional view. Though Fig. 3 illustrates a very simple example, the present invention can also be applied to the cutting of a large number of holes and holes of different types.

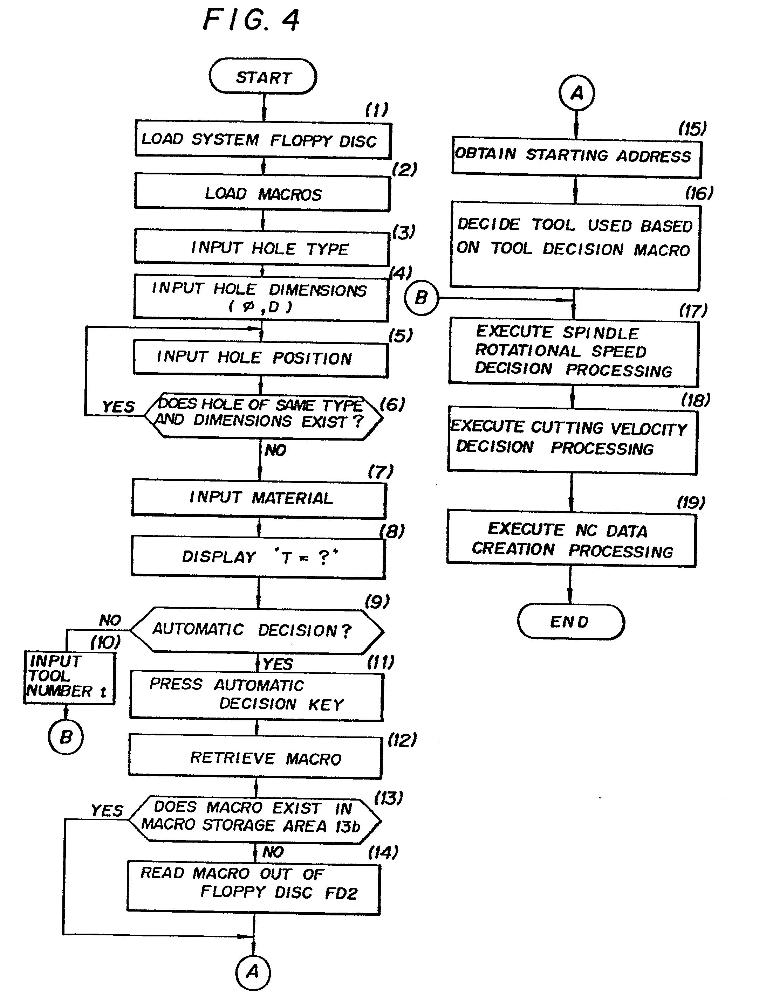

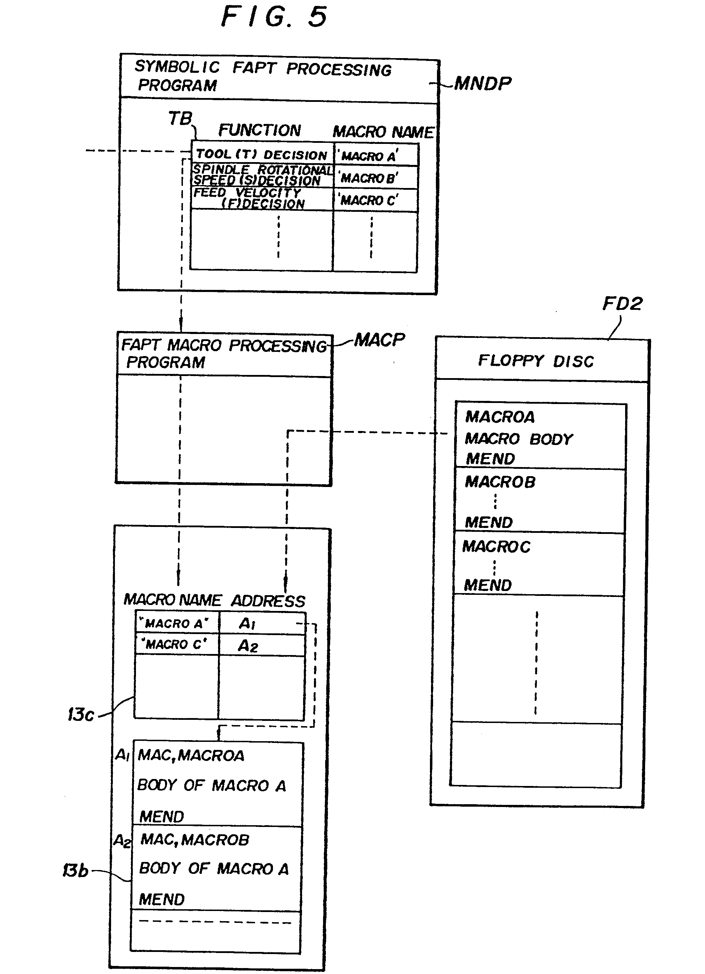

Fig. 4 is a processing flowchart, and Fig. 5 is a view for describing what is stored in the RAM.

(1)   In executing automatic programming, the floppy disc FD1 (Fig. 1) is set in the floppy disc unit 5.   The floppy disc FD1 stores a processing program MNDP (see Fig. 5) for creating hole drilling NC data, and a macro processing program MACP (hereafter, both processing programs will be referred to collectively as a system program).   Next, a loading program stored in the ROM 12 is started to store the system program is a system program storage area 13a (Fig. 1) of the RAM 13. The processing program MNDP for NC data creation contains a table TB (Fig. 5) indicating the correlation between the name of each item of auxiliary machining data (tool number, spindle rotational speed, cutting velocity, cutting conditions) and the name of a macro.

(2)   Next, the floppy disc FD2 is set in the flopply disc unit 5 and each macro is stored in a macro storage area 13b (Fig. 1) of RAM 13 under the control of the system program.   As shown in Fig. 5, each macro is composed of a macro name (e.g. MACRO A, MACRO B, MACRO C ...), a macro body and a code MEND signifying the end of the macro.   In parallel with the processing for storing each macro in the storage area 13b, corresponding relationships between macro names and the leading addresses of the storage area storing the macros designated by the macro names are stored in a point section 13c.   In other words, if we let A1, A2, A3... represent the leading addresses of the macros

-8-

MACRO A, MACRO B, MACRO C ..., then corresponding relationships will be stored in the point section 13c in the manner shown in Fig. 5.

The foregoing makes it possible to execute processing for the creation of NC program data. It is followed by specifying hole shape (hole depth D and diameter $\phi$), hole position, hole type and the like in a conversational mode under the control of the system program. The necessary auxiliary machining data are decided automatically. Let us now describe this processing for a case where drilling is performed.

(3) First, the type of hole HL (see Fig. 3) is inputted. Since the type of hole in this case is a drilled hole, this fact is inputted.

(4) Next, the processor 11 causes a prompt ("$\phi$ = ?") regarding the diameter $\phi$ of the hole HL to appear on the display screen. The operator responds by referring to the design drawing and inputting the diameter $\phi$ from the keyboard.

When the processing for specifying hole diameter is completed, the processor then causes a prompt ("D = ?") calling for the depth D of the hole HL to appear on the display screen. The operator responds by referring to the design drawing and inputting the depth D from the keyboard. These steps constitute a hole dimensions input step.

(5) Thereafter, the processor 11a causes a prompt ("X = ?") calling for the X coordinate of the hole HL to appear on the display screen. If the operator responds by inputting a hole coordinate $x_o$ along the X axis using the keyboard 4, then a prompt ("Y = ?") calling for the Y coordinate of the hole will appear on the display screen. Thereafter, and in similar fashion, the Y coordinate $y_o$ and Z coordinate $z_o$ of the hole are inputted from the keyboard 4.

(6)   Next, the processor causes the display screen to display an inquiry as to whether there is a hole of the same type and same dimensions as the hole HL. If there is, the position of the hole is inputted; if not, the program proceeds to the next step.

(7)   When processing for specifying hole positions and hole dimensions has been completed for all holes of the same type and dimensions, the processor 11 causes a prompt requesting the material of the workpiece WK to appear on the display screen. The operator responds by inputting the workpiece material. For example, the names of the materials are displayed on the display screen along with menu numbers and a workpiece material is specified by inputting the prescribed menu number from the keyboard 4.

(8)   When the processing for specifying the material ends, the processor causes a prompt ("T = ?") regarding the tool used to appear on the display screen.

(9)   In response to the prompt, the operator determines whether the tool is to be decided automatically.

(10) If the tool used is not to be decided automatically, then the tool number t (a numerical value) of the tool used is inputted from the keyboard. This will end the processing for specifying the tool.

(11) If the tool used is to be decided automatically, the operator presses an automatic decision key on the keyboard.

(12) In response to pressing of the automatic decision key, the processing program MNDP (Fig. 5) for NC data creation retrieves the macro name (e.g. "MACRO A") that decides the tool from the table TB (MACRO A $\longrightarrow$ NAME) and thereafter turns over control to the macro processing program MACP.

(13) Next, the macro processing program MACP checks whether the macro having the macro name NAME has been stored in the storage area 13b. This is to take into account the fact that if the storage area 13b has a small capacity, not all of the macros may have been read out to the storage area 13b.

(14) If the macro is not stored in the storage area 13b, the unnecessary macros are removed and, in their place, the macro designated by NAME is read in from the floppy disc FD2.

(15) Thereafter, the leading address $A_1$ of the storage area storing the macro given by NAME is retrieved from the pointer section 13c.

(16) From this point onward, processing for deciding the tool used is performed by successively reading out the instructions constituting the macro starting from address $A_1$ until the code indicating the macro end MEND is sensed. When the macro end MEND is sensed, processing for deciding the tool used ends and the macro processing program MACP returns control to the processing program MNDP for NC data creation. The macro will be described later.

(17) When the tool used has been decided, the processor causes a prompt ("S = ?") regarding the rotational speed of the spindle to appear on the display screen. Spindle rotational speed S is then decided through processing similar to that of step (9) - (16).

(18) When the spindle rotational speed S has been decided, the processor causes a prompt ("F = ?") regarding the cutting velocity to appear on the display screen. Cutting velocity is then decided through processing similar to that of step (9) - (16).

(19) When the auxiliary machining data have been decided in the foregoing manner, the processor uses the hole position data and auxiliary machining data to perform well-known NC data creation processing in order to create NC program data for hole cutting by successively positioning the prescribed tool at the hole positions.

Each macro for deciding the auxiliary machining data will now be described.

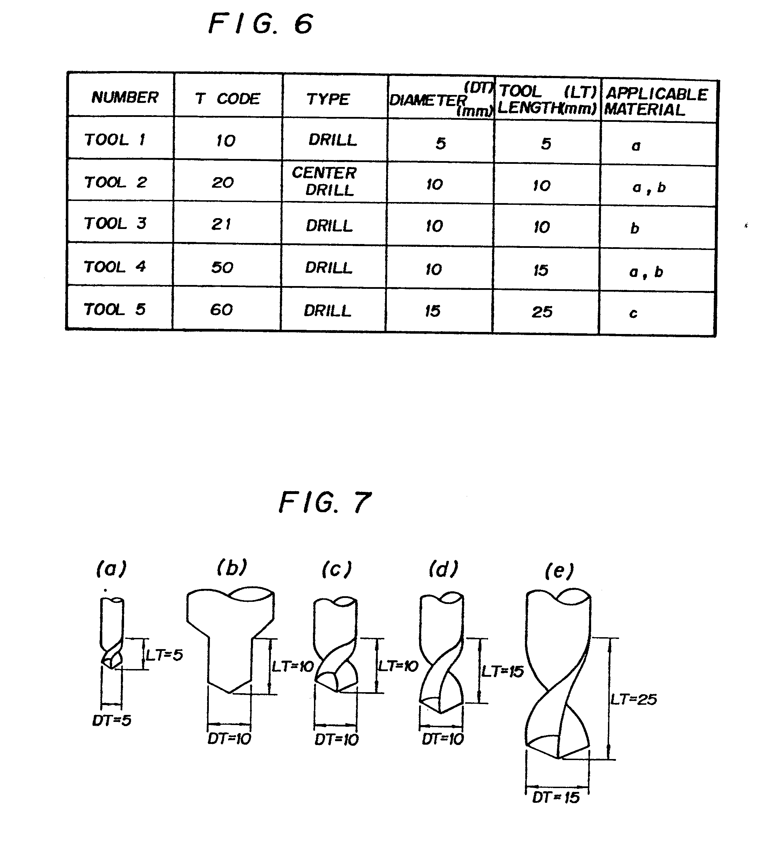

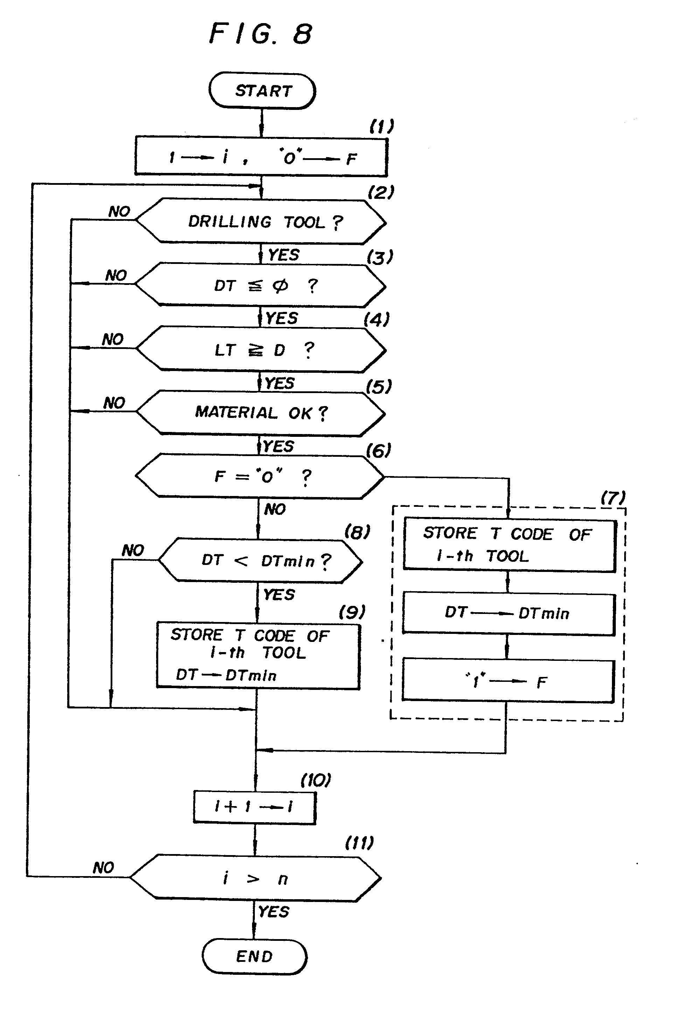

Figs. 6 through 8 are views useful in describing a macro for deciding the tool used. Fig. 6 is a view for describing a tooling file, Fig. 7 is a view for describing each of the drilling tools registered in the tooling file, and Fig. 8 is a flowchart of a macro for deciding the tool used. As shown in Fig. 6, the tooling file is composed of a T code (tool number code), a tool type (drilling, center drilling ...), a tool diameter (DT), a tool length (LT) and data specifying an applicable workpiece material, all for each tool. The tools indicated by tool numbers 1 - 5 have the shapes illustrated in Figs. 7(a) - (e), respectively.

If a hole having a hole diameter $\phi = 10$ and a hole depth $D = 12$ is to be cut in the workpiece of material b by a drilling tool, then the tool used is decided in the following manner, with reference being had to the flowchart of Fig. 8:

(1) Initialization is performed by the operation $1 \longrightarrow i$, and a flag F is set to "0".

(2) Next, data indicative of an i-th tool is read out of the tooling file and it is checked whether the i-th tool is a drilling tool. If the i-th tool is not for drilling, the program skips to a step (10) so that processing from that point onward is executed.

(3) If the i-th tool is a drilling tool, then it is checked whether $DT \leq \phi$ holds. When $DT > \phi$ holds, the program skips to step (10) so that processing from that point onward is executed.

(4) If $DT \leq \phi$ holds, however, then it is checked whether $LT \geq D$ holds. If $LT < D$ holds, the program skips to a step (10) so that processing from that point onward is executed.

(5) When $LT > D$ holds, it is checked whether the material of the workpiece to which the i-th tool is to be applied is b. If the material is not b, then the program skips to a step (10) so that processing from that point onward is executed.

(6) If the workpiece is b, then it is checked whether the flag F is "0".

(7) If the flag is "0", then the T code of the i-th tool is stored in memory, the tool diameter DT of the tool is stored as $DT_{min}$, the flag F is set to "1", and processing is executed from step (10) onward.

(8) If the flag is "1", on the other hand, the tool diameter DT of the i-th tool and the stored $DT_{min}$ are compared in magnitude.

(9) If $DT < DT_{min}$ is found to hold in the abovementioned comparison operation, then no action is taken and processing is executed from step (10) onward. If $DT \geq DT_{min}$ is found to hold, the tool diameter of the i-th tool is construed to be closest to the diameter $\phi$, the T code thereof is used to update the previously stored T code, and the operation $DT \longrightarrow DT_{min}$ is performed.

(10) Next, i is incremented by the operation i +

$1 \longrightarrow i$. (11) Thereafter, it is checked whether $i > n$ holds, where n is the number of tools registered in the tool file. If $i \leq n$ holds, processing is executed from step (2) onward; if $i > n$ holds, the tool decided upon as the tool used is that designated by the stored T code. Among the tool diameters equal to or smaller than the hole diameter, the tool having the diameter closest to the hole diameter $\phi$ is selected through the foregoing processing.

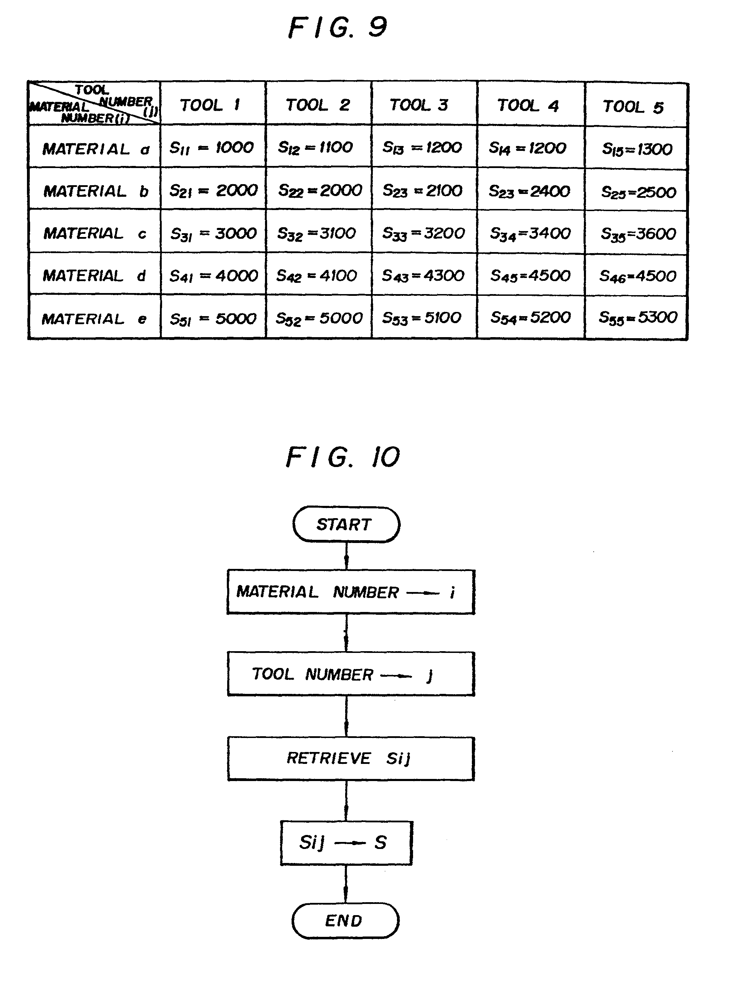

Figs. 9 and 10 are views for describing a macro that decides spindle rotational speed. Fig. 9 is a view for describing a spindle rotational speed file and illustrates the correlation among workpiece materials, tools and spindle rotational speeds. Fig. 10 is a flowchart of a macro for deciding spindle rotational speed.

When the workpiece material and tool have been decided, a spindle rotational speed $S_{ij}$ is found automatically from the spindle rotational speed file. Accordingly, the spindle rotational speed Sij is obtained from the file by using the material number inputted from the keyboard and the tool number decided by the tool decision macro as keys.

Assuming that the cutting velocity F is given as a function of the tool T, material M and spindle rotational speed S, the macro for deciding the cutting velocity F is given as

$$F = f(T, M, S)$$

For instance, if the macro is given by

$$F = f(S) = 2 \cdot S$$

in a simple example, then the macro for deciding cutting velocity need only obtain F from the above equation using the spindle speed S.

According to the present invention as described above, it is arranged to input at least shape data in a conversational mode among data necessary for creating NC data, store a processing program for automatically creating NC data using the shape data and the like, as well as macros for deciding auxiliary machining data necessary for NC data creation, in a memory beforehand, call a macro corresponding to prescribed auxiliary machining data when the auxiliary machining data are to be decided, decide the auxiliary machining data by using the macro, and create NC data to perform machining in accordance with a desired shape by using the shape data and auxiliary machining data. Accordingly, when a user requests that auxiliary machining data be decided by a special method suited to a machine tool, or when it is requested that the auxiliary machining data be decided based on the user's own know-how, these requests can be complied with by modifying solely the macro that decides these auxiliary machining data. It is unnecessary to alter the main processing program. This enables a higher performance/cost ratio to be obtained and makes it possible to rapidly provide the automatic programming

0207998

apparatus requested by the user.

According to the present invention, macros corresponding to auxiliary data are stored in memory, thus making it possible to comply with a user's request by modifying only the prescribed macro.

CLAIMS:

1.   A method of creating NC data, characterized by having steps of:

inputting at least shape data in a conversational mode from among data necessary for creating NC data;

storing a processing program for creating NC data automatically using said shape data, as well as macros for deciding auxiliary machining data necessary for NC data creation, in a memory beforehand;

when deciding prescribed auxiliary machining data, calling a macro corresponding to said auxiliary machining data;

deciding the auxiliary machining data by using said macro; and

creating NC data to perform machining in accordance with an inputted shape by using said shape data and auxiliary machining data under the control of the processing program.

2.   A method of creating NC data according to claim 1, characterized in that the auxiliary machining data contain a tool used, a spindle rotational speed and cutting velocity, a macro being stored to correspond to each item of auxiliary machining data.

3.   A method of creating NC data according to claim 1, characterized in that the processing program and each macro are stored in an external storage medium, and said processing program and each macro are stored in an internal RAM before NC data creation processing is executed.

4. A method of creating NC data according to claim 3, characterized by:

storing in the processing program a first correspondence table giving correspondence between the auxiliary machining data and names of macros in the processing program;

storing in a pointer storage area of the RAM a second correspondence table giving correspondence between the starting addresses at which macros are stored and the names of the macros when storing the macros in the RAM;

when deciding auxiliary machining data, obtaining a macro name corresponding to said auxiliary machining data from said first correspondence table;

obtaining a starting address corresponding to said macro name from said second correspondence table; and

deciding auxiliary machining data by calling a macro from said starting address.

FIG. 1

## F I G. 2

1 APPARATUS MAIN FRAME
3 DISPLAY UNIT
2a
2 PRINTER
FD1
FD2
5 FLOPPY DISC UNIT
4 KEYBOARD
4a

## F I G. 3(a)

Y
HL
WK
Z
X

## F I G. 3(b)

Y
HL
WK
$y_0$
$x_0$
X

## F I G. 3(c)

Z
$\phi$
HL
WK
Z
D
X

0207998

# FIG. 4

```
        ( START )
           │
           ▼                              (1)
┌─────────────────────────┐
│ LOAD SYSTEM FLOPPY DISC  │
└─────────────────────────┘
           │                              (2)
┌─────────────────────────┐
│      LOAD  MACROS        │
└─────────────────────────┘
           │                              (3)
┌─────────────────────────┐
│     INPUT HOLE TYPE      │
└─────────────────────────┘
           │                              (4)
┌─────────────────────────┐
│  INPUT HOLE DIMENSIONS   │
│        ( ∅ ,D )          │
└─────────────────────────┘
           │                              (5)
┌─────────────────────────┐
│   INPUT HOLE POSITION    │
└─────────────────────────┘
           │                              (6)
  YES ╱ DOES HOLE OF SAME TYPE ╲
  ◄───╲ AND DIMENSIONS EXIST ?  ╱
           │ NO
           ▼                              (7)
┌─────────────────────────┐
│     INPUT MATERIAL       │
└─────────────────────────┘
           │                              (8)
┌─────────────────────────┐
│     DISPLAY  'T = ?'     │
└─────────────────────────┘
           │                              (9)
  NO ╱ AUTOMATIC  DECISION ? ╲
  ◄──╲                       ╱
 (10)      │ YES                          (11)
┌──────┐ ┌─────────────────────────┐
│INPUT │ │   PRESS  AUTOMATIC       │
│TOOL  │ │    DECISION  KEY         │
│NUMBER t│└─────────────────────────┘
└──────┘      │                          (12)
   │       ┌─────────────────────────┐
  (B)      │    RETRIEVE  MACRO       │
           └─────────────────────────┘
              │                          (13)
  YES ╱ DOES MACRO EXIST IN ╲
  ◄──╲ MACRO STORAGE AREA 13b ╱
              │ NO                        (14)
           ┌─────────────────────────┐
           │   READ MACRO OUT OF      │
           │    FLOPPY DISC FD2       │
           └─────────────────────────┘
              │
             (A)
```

```
          (A)
           │                              (15)
┌─────────────────────────┐
│  OBTAIN STARTING ADDRESS │
└─────────────────────────┘
           │                              (16)
┌─────────────────────────┐
│ DECIDE TOOL  USED BASED  │
│ ON TOOL DECISION MACRO   │◄── (B)
└─────────────────────────┘
           │                              (17)
┌─────────────────────────┐
│   EXECUTE SPINDLE        │
│   ROTATIONAL SPEED       │
│   DECISION  PROCESSING   │
└─────────────────────────┘
           │                              (18)
┌─────────────────────────┐
│ EXECUTE CUTTING VELOCITY │
│  DECISION   PROCESSING   │
└─────────────────────────┘
           │                              (19)
┌─────────────────────────┐
│   EXECUTE  NC  DATA      │
│   CREATION  PROCESSING   │
└─────────────────────────┘
           │
        ( END )
```

# F I G. 5

SYMBOLIC FAPT PROCESSING PROGRAM — MNDP

TB

| FUNCTION | MACRO NAME |
|---|---|
| TOOL (T) DECISION | 'MACRO A' |
| SPINDLE ROTATIONAL SPEED (S)DECISION | 'MACRO B' |
| FEED VELOCITY (F)DECISION | 'MACRO C' |
| ⋮ | ⋮ |

FAPT MACRO PROCESSING PROGRAM — MACP

FD2

FLOPPY DISC

```
MACROA
MACRO BODY
MEND
MACROB
   ⋮
MEND
MACROC
   ⋮
MEND

   ⋮
```

MACRO NAME   ADDRESS

| 'MACRO A' | $A_1$ |
|---|---|
| 'MACRO C' | $A_2$ |
| | |

13c

```
A₁  MAC, MACROA
    BODY OF MACRO A
    MEND
A₂  MAC, MACROB
    BODY OF MACRO A
    MEND
```

13b

# FIG. 6

| NUMBER | T CODE | TYPE | DIAMETER (DT) (mm) | TOOL LENGTH (LT) (mm) | APPLICABLE MATERIAL |
|--------|--------|------|----------|-------------|----------|
| TOOL 1 | 10 | DRILL | 5 | 5 | a |
| TOOL 2 | 20 | CENTER DRILL | 10 | 10 | a , b |
| TOOL 3 | 21 | DRILL | 10 | 10 | b |
| TOOL 4 | 50 | DRILL | 10 | 15 | a , b |
| TOOL 5 | 60 | DRILL | 15 | 25 | c |

# FIG. 7

(a)  (b)  (c)  (d)  (e)

LT=5   LT=10   LT=10   LT=15   LT=25

DT=5   DT=10   DT=10   DT=10   DT=15

0207998

# F I G. 8

```
                    START

(1)    1 ──→ i ,  "O" ──→ F

(2)  NO ──  DRILLING TOOL ?
                   │YES
(3)  NO ──  DT ≦ φ ?
                   │YES
(4)  NO ──  LT ≧ D ?
                   │YES
(5)  NO ──  MATERIAL OK ?
                   │YES
(6)         F = "O" ?  ──→  (7) ┌────────────────┐
                   │NO          │ STORE T CODE OF │
(8)  NO ──  DT < DTmin ?        │   i-th TOOL     │
                   │YES         │                 │
(9)  STORE T CODE OF            │ DT ──→ DTmin    │
        i-th TOOL               │                 │
     DT ──→ DTmin               │ "1" ──→ F       │
                                └────────────────┘

(10)    i + 1 ──→ i

(11)  NO ──  i > n
                   │YES
                  END
```

## F I G. 9

| TOOL NUMBER (j) / MATERIAL NUMBER (i) | TOOL 1 | TOOL 2 | TOOL 3 | TOOL 4 | TOOL 5 |
|---|---|---|---|---|---|
| MATERIAL a | $S_{11} = 1000$ | $S_{12} = 1100$ | $S_{13} = 1200$ | $S_{14} = 1200$ | $S_{15} = 1300$ |
| MATERIAL b | $S_{21} = 2000$ | $S_{22} = 2000$ | $S_{23} = 2100$ | $S_{23} = 2400$ | $S_{25} = 2500$ |
| MATERIAL c | $S_{31} = 3000$ | $S_{32} = 3100$ | $S_{33} = 3200$ | $S_{34} = 3400$ | $S_{35} = 3600$ |
| MATERIAL d | $S_{41} = 4000$ | $S_{42} = 4100$ | $S_{43} = 4300$ | $S_{45} = 4500$ | $S_{46} = 4500$ |
| MATERIAL e | $S_{51} = 5000$ | $S_{52} = 5000$ | $S_{53} = 5100$ | $S_{54} = 5200$ | $S_{55} = 5300$ |

## F I G. 10

START

MATERIAL NUMBER $\longrightarrow$ i

TOOL NUMBER $\longrightarrow$ j

RETRIEVE Sij

Sij $\longrightarrow$ S

END

# INTERNATIONAL SEARCH REPORT

International Application No. PCT/JP85/00726

## I. CLASSIFICATION OF SUBJECT MATTER (if several classification symbols apply, indicate all)

According to International Patent Classification (IPC) or to both National Classification and IPC

Int.Cl$^4$    G05B 19/403

## II. FIELDS SEARCHED

### Minimum Documentation Searched

| Classification System | Classification Symbols |
|---|---|
| IPC | G05B 19/18 – 19/42 |

### Documentation Searched other than Minimum Documentation to the Extent that such Documents are Included in the Fields Searched

| | |
|---|---|
| Jitsuyo Shinan Koho | 1926 – 1986 |
| Kokai Jitsuyo Shinan Koho | 1971 – 1986 |

## III. DOCUMENTS CONSIDERED TO BE RELEVANT

| Category | Citation of Document, with indication, where appropriate, of the relevant passages | Relevant to Claim No. |
|---|---|---|
| Y | JP, A, 58-181107 (Osaka Kiko Co., Ltd.), 22 October 1983 (22. 10. 83), P.3, upper left column, line 2 to p.4, upper right column, line 10 (Family: none) | 1 – 4 |
| Y | JP, A, 57-189206 (Fujitsu Fanuc Limited), 20 November 1982 (20. 11. 82), P.1, right column, line 16 to p.2, upper left column, line 17 & WO, A1, 8204137 & EP, A1, 79388 | 1 – 4 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 26, 1986 (26. 03. 86) | April 7, 1986 (07. 04. 86) |
| International Searching Authority | Signature of Authorized Officer |
| Japanese Patent Office | |

Form PCT/ISA/210 (second sheet) (October 1981)